# EUROPÄISCHE PATENTSCHRIFT

(11) **EP 4 385 312 B1**
(45) Veröffentlichungstag und Bekanntmachung des Hinweises auf die Patenterteilung: **10.12.2025**
(21) Anmeldenummer: 23204242.4
(22) Anmeldetag: 18.10.2023
(51) Int. Cl.: A01F 15/04, A01F 15/08

(54) **QUADERBALLENPRESSE**
RECTANGULAR BALER
PRESSE À BALLES CARRÉES

(30) Priorität: 16.12.2022 DE 102022133714
(43) Veröffentlichungstag der Anmeldung: 19.06.2024
(73) Patentinhaber: Usines CLAAS France S.A.S, 57140 St. Rémy / Woippy (FR)
(72) Erfinder: Fuchs, Volker, 54439 Saarburg (DE); Schulte, Michael, 33129 Delbrück (DE); Obermeier-Hartmann, Robert, 33014 Bad Driburg (Pömbsen) (DE)
(74) Vertreter: CLAAS Gruppe

(56) Entgegenhaltungen:
- EP-A1- 3 508 052
- EP-A1- 4 151 077
- EP-A1- 4 151 078
- US-A1- 2003 167 939
- US-A1- 2014 165 859

## Beschreibung

Die vorliegende Erfindung betrifft eine Quaderballenpresse gemäß dem Oberbegriff des Anspruches 1.

Quaderballenpressen werden in der Landwirtschaft dazu eingesetzt, um beispielsweise im Schwad abgelegtes halmartiges Erntegut wie Stroh, Heu, Gras oder dergleichen aufzunehmen, weiter zu zerkleinern und zu quaderförmigen Ballen zu verdichten bzw. zu pressen. Hierzu verfügen die Quaderballenpressen über verschiedene Arbeitsaggregate, die der erforderlichen Förderung und/oder Weiterverarbeitung des Ernteguts dienen. Derartige Arbeitsaggregate sind beispielsweise ein Schneidrotor zum Zerkleinern des aufgesammelten Ernteguts, ein Raffer zum Vorverdichten und Zuführen des vom Schneidrotor zerkleinerten Ernteguts in einen Presskanal der Quaderballenpresse, ein Presskolben, der in dem Presskanal beweglich angeordnet ist und der das in dem Presskanal befindliche und vorverdichtete Erntegut zu einem Quaderballen presst, sowie ein Knoter, der den gepressten Ballen bindet. Diese Arbeitsaggregate stehen üblicherweise mit einem zentralen Antriebsstrang der Quaderballenpresse in Antriebsverbindung, der im Betrieb der Quaderballenpresse mit einer Zapfwelle einer landwirtschaftlichen Arbeitsmaschine, insbesondere eines Traktors, verbunden ist. Zum Antreiben von Arbeitsaggregaten der Quaderballenpresse, wie dem Presskolben, ist eine Getriebeanordnung vorgesehen, welche den in dem Presskanal der Quaderballenpresse zwischen Endlagen beweglich angeordneten Presskolben sowie zumindest ein weiteres Arbeitsaggregat der Quaderballenpresse antreibt.

Derartige Quaderballenpressen umfassen herkömmlicher Weise ein sogenanntes Schwungrad, welches als Dämpfer und Energiespeicher zwischen einem die Antriebsleistung der Quaderballenpresse bereitstellenden Antriebsaggregat der landwirtschaftlichen Arbeitsmaschine und den Arbeitsaggregaten der Quaderballenpresse dient. Gegenwärtig wird die Entwicklung immer leistungsfähigerer und größerer Quaderballenpressen angestrebt, die ein in den Presskanal überführtes und vorverdichtetes Erntegut mit einem sehr hohen Pressdruck zu einem Quaderballen verdichten. Diese Bestrebungen führen dazu, dass immer höhere Antriebsleistungen mittels des Antriebsstrangs der Quaderballenpresse dem Presskolben zugeführt werden müssen, was wiederum dazu führt, dass immer größere und schwere Schwungräder verbaut werden müssen, um die erforderlichen Antriebsleistungen überhaupt bereitstellen und etwaige Belastungen auf den Antriebsstrang der Quaderballenpresse im Betrieb reduzieren zu können.

Die Verwendung von größeren und schweren Schwungrädern führt jedoch dazu, dass sich das Gewicht der Quaderballenpresse erhöht und bereits eine sehr hohe Antriebsleistung benötigt wird, um das Schwungrad überhaupt aus dem Stillstand beschleunigen zu können. Gegenwärtig sind solche Schwungräder auf einer Antriebswelle der Quaderballenpresse angeordnet, die oft als Kardanwelle ausgestaltet ist und mit einem Drehmomenteneingangsanschluss, an dem die Antriebsleistung des Antriebsaggregats der landwirtschaftlichen Arbeitsmaschine mittels einer Zapfwelle bereitgestellt wird, verbunden ist. Die das Schwungrad tragende Antriebswelle ist mechanisch mit den Arbeitsaggregaten der Quaderballenpresse verbunden. Bei einer Inbetriebnahme der Quaderballenpresse muss daher das Schwungrad immer gemeinsam mit einem Großteil der Antriebsstrangkomponenten und den an den Antriebsstrang angeschlossenen Arbeitsaggregaten der Quaderballenpresse aus dem Stillstand beschleunigt werden. Bei einigen landwirtschaftlichen Arbeitsmaschine führt dies dazu, dass es bei einer Inbetriebnahme der Quaderballenpresse aufgrund der hohen Massenträgheit zu einem unerwünschten Abwürgen des Antriebsaggregats der landwirtschaftlichen Arbeitsmaschine kommt und eine Inbetriebnahme der Quaderballenpresse nicht oder nur schwer möglich ist. Zudem kann es zu einer Beschädigung der Einschaltkupplung kommen.

Die Europäische Patentanmeldung EP 3 508 052 A1 offenbart angesichts dieser Problematik eine Quaderballenpresse gemäß dem Oberbegriff des Anspruchs 1. Insbesondere werden die Segmente eines zweigeteilten Schwungrades anhand einer schaltbaren Kupplungsvorrichtung nacheinander zugeschalten.

Die in der WO 2014/170318 A1 beschriebene Quaderballenpresse umfasst eine auf einer Kardanwelle zwischen einem Drehmomenteneingangsanschluss und einem Schwungrad angeordnete Übertragungseinrichtung, die zwischen einem Startzustand und einem Betriebszustand schaltbar ist. Im Betriebszustand überträgt die Übertragungseinrichtung eine Drehbewegung einer Zapfwelle einer landwirtschaftlichen Arbeitsmaschine vollständig auf ein Schwungrad, so dass die Übertragung vergleichbar mit einer herkömmlichen Achse ist. Im Startzustand überträgt die Übertragungseinrichtung die Drehbewegung der Zapfwelle hingegen nur teilweise auf das Schwungrad. Dadurch kann die Zapfwelle eine höhere Drehzahl als das Schwungrad haben. Die Übertragungseinrichtung ist als Planetengetriebe oder als Reibkupplung ausgebildet. Aufgrund der Übertragungseinrichtung kann ein Schwungrad in der Quaderballenpresse eingesetzt werden, das an und für sich zu schwer und/oder zu groß ist, um über eine direkte Verbindung in Betrieb genommen zu werden.

Eine Erhöhung der Antriebsleistung des Presskolbens führt dazu, dass die Dimensionierung des Antriebsstrangs, insbesondere der Getriebebauteile, angepasst werden muss oder es muss eine landwirtschaftliche Arbeitsmaschine zum Einsatz kommen, welche eine höhere Antriebsleistung aufweist.

Ausgehend von dem vorstehend genannten Stand der Technik ist es demnach die Aufgabe der vorliegenden Erfindung, eine Quaderballenpresse der eingangs genannten Art weiterzubilden, welche die an den Arbeitsaggregaten der Quaderballenpresse erforderlichen Antriebsleistung, insbesondere die Antriebsleistung des Presskolbens, zuverlässig bereitstellt, sich dabei durch einen geringeren Bedarf der von der Arbeitsmaschine bereitzustellenden Antriebsleistung auszeichnet.

Diese Aufgabe wird erfindungsgemäß durch die Merkmale des unabhängigen Patentanspruchs 1 gelöst, wobei vorteilhafte Weiterbildungen der erfindungsgemäßen Quaderballenpresse Gegenstand der entsprechenden abhängigen Patentansprüche 2 bis 13 sind.

Gemäß dem Anspruch 1 wird eine Quaderballenpresse vorgeschlagen, die zumindest einen in einem Presskanal zwischen Endlagen beweglich angeordneten Presskolben sowie einen Antriebsstrang umfasst, der dazu ausgebildet ist, zumindest den Presskolben anzutreiben, wobei der Antriebsstrang einen Drehmomenteneingangsanschluss aufweist, mittels dem ein Drehmoment dem Antriebsstrang zuführbar ist, wobei der Antriebsstrang eine dem Drehmomenteneingangsanschluss nachgeordnete Übertragungsvorrichtung mit zumindest einem Schwungrad umfasst. Erfindungsgemäß ist vorgesehen, dass die Übertragungsvorrichtung eine erste Leistungsverzweigung, die mit dem Drehmomenteneingangsanschluss verbunden ist, und zwei dem Presskolben zugeordnete Untersetzungsgetriebe umfasst, die parallel zueinander an die erste Leistungsverzweigung angeschlossen sind, wobei jedem Untersetzungsgetriebe zumindest ein Schwungrad vorgeschaltet ist, wobei der ersten Leistungsverzweigung und zumindest einem der Schwungräder eine schaltbare Kupplungsvorrichtung zwischengeschaltet ist, wobei die Kupplungsvorrichtung dazu eingerichtet ist, bei einer Inbetriebnahme oder einem Anlaufvorgang der Quaderballenpresse das zumindest eine Schwungrad zuzuschalten.

Die erfindungsgemäße Quaderballenpresse ermöglicht den Einsatz zumindest zweier Schwungräder, die kleiner ausgeführt sind als das eine aus dem Stand der Technik bekannte Schwungrad. Durch die zumindest eine schaltbare Kupplungsvorrichtung wird bei einer Inbetriebnahme und/oder einem Anlaufvorgang der Quaderballenpresse zunächst nur eines der zumindest zwei Schwungräder angetrieben, wodurch der Bedarf an zur Verfügung zu stellender Antriebsleistung seitens der Arbeitsmaschine geringer ist. Das weitere Schwungrad wird durch die Betätigung der schaltbaren Kupplungsvorrichtung erst zu einem späteren Zeitpunkt zugeschaltet. Die Inbetriebnahme und/oder der Anlaufvorgang der Quaderballenpresse erfolgt stufenweise. Ein weiterer sich daraus ergebender Vorteil besteht darin, dass durch den gestuften Prozess bei der Inbetriebnahme und/oder der Durchführung des Anlaufvorganges die Belastung des Drehmomenteneingangsanschlusses als auch einer Antriebswelle der landwirtschaftlichen Arbeitsmaschine einer geringeren Belastung unterliegen. Die Gefahr einer Beschädigung aufgrund einer Fehlbedienung bei der Inbetriebnahme kann ebenfalls reduziert werden.

Insbesondere kann der ersten Leistungsverzweigung und den dem Presskolben zugeordneten Untersetzungsgetrieben jeweils zumindest ein Seitengetriebe zwischengeschaltet sein. Die Kombination aus Seitengetriebe und diesem nachgeschalteten Schwungrad erlaubt es, die zumindest zwei Schwungräder kleiner zu dimensionieren als bei herkömmlichen aus dem Stand der Technik bekannten Antriebssträngen. Die von dem Schwungrad zu erfüllenden Aufgaben, wie das Abschirmen von Drehmomentenstößen des Presskolbens oder der Arbeitsaggregate und das Verringern von Drehzahlschwankungen des Antriebsstrangs, werden von den zumindest zwei kleineren Schwungräder in gleichem Maße wirksam erfüllt. Eine mittels der beiden Seitengetriebe erzielte Entkopplung von erster Leistungsverzweigung und den Untersetzungsgetrieben sorgt ferner für einen modularen Aufbau des Antriebsstrangs, so dass dieser durch einen Austausch von einzelnen Baugruppen des Antriebsstrangs unkompliziert im Hinblick auf verschiedene Leistungsklassen und Baugrößen von Quaderballenpressen angepasst werden kann, ohne dass Antriebsstrangkonzept bzw. -layout grundlegend anpassen zu müssen.

Dabei kann den dem Presskolben zugeordneten Untersetzungsgetrieben und dem zugehörigen Seitengetriebe jeweils eines der Schwungräder zwischengeschaltet sein. Dadurch kann eine zwischen Leistungsverzweigung und Presskolben vorhandene räumliche Distanz besonders einfach überbrückt werden, ohne dass im Zentrum der Quaderballenpresse zwischen erster Leistungsverzweigung und Presskolben Antriebsstrangkomponenten angeordnet sind, die einem Aufbau der Quaderballenpresse entgegenstehende Bauraumrestriktionen schaffen.

Gemäß einer vorteilhaften Weiterbildung ist vorgesehen, dass die zumindest eine schaltbare Kupplungsvorrichtung in zumindest eines der Seitengetriebe integriert ist.

Insbesondere können die Seitengetriebe als Zugmittelgetriebe, vorzugsweise Keilriemengetriebe oder Kettengetriebe, ausgeführt sein. Die Ausgestaltung der beiden Seitengetriebe als Zugmittelgetriebe ermöglicht es, in den beiden dem Presskolben zugeordneten Untersetzungsgetrieben während des Betriebs der Quaderballenpresse durch eine mittels des Presskolbens im Betrieb erzeugte Last wirkende Verwindung (Torsion) auszugleichen bzw. eine solche Verwindung nicht auf andere Baugruppen des Antriebsstrangs zu übertragen, da dies zu einer Beschädigung oder Zerstörung der Baugruppen führen könnte.

Die Verwendung eines Keilriemengetriebes ist in diesem Zusammenhang als besonders vorteilhaft anzusehen, da hierdurch die Kosten des Antriebsstrangs geringgehalten werden können. Kettengetriebe sind jedoch im Hinblick auf den Zweck gleichermaßen einzusetzen. Auch ist es vorstellbar die Seitengetriebe als Kegelradstufe auszubilden, wobei ein mit einer Abtriebswelle der ersten Leistungsverzweigung in Wirkverbindung stehendes Kegelrad der Kegelradstufe mittels einer Gelenkwelle mit einem zweiten Kegelrad verbunden ist, das wiederum das zumindest eine Schwungrad des jeweiligen Seitengetriebes antreibt.

Alternativ können die Seitengetriebe als Stirnradgetriebe oder Kronenradgetriebe ausgeführt sein.

Weiterhin kann die zumindest eine schaltbare Kupplungsvorrichtung als ein verschiebbares Antriebsrad des als Zugmittelgetriebe ausgeführten Seitengetriebes ausgeführt sein.

Eine weitere Alternative bildet die Ausführung der zumindest einen schaltbaren Kupplungsvorrichtung als eine Riemenkupplung, welche in eines der als Zugmittelgetriebe ausgeführten Seitengetriebe integriert ist.

Bevorzugt kann die zumindest eine schaltbare Kupplungsvorrichtung auf einer die erste Leistungsverzweigung und eines der Seitengetriebe verbindenden Abtriebswelle angeordnet sein.

Insbesondere kann die Abtriebswelle, welche die erste Leistungsverzweigung und die beiden Seitengetriebe trieblich miteinander verbindet, als eine durchgehende Welle oder als eine zweiteilige Welle ausgeführt sein.

Gemäß einer vorteilhaften Weiterbildung ist vorgesehen, dass die zumindest eine schaltbare Kupplungsvorrichtung als Trockenkupplung, nasslaufende Lamellenkupplung oder hydrodynamische Kupplung ausgeführt ist.

Eine Ausführung der zumindest einen schaltbaren Kupplungsvorrichtung als Trockenkupplung, nasslaufende Lamellenkupplung oder hydrodynamische Kupplung ermöglicht eine bedarfsweise Aus- oder Einkupplung der ihr in Richtung des Leistungsflusses betrachtet nachgeschalteten Teile des Antriebsstrangs, hier des zuzuschaltenden Schwungrades der Quaderballenpresse. Insbesondere kann mittels einer Ausführung der zumindest einen schaltbaren Kupplungsvorrichtung als hydrodynamische Kupplung das Auftreten von zusätzlichen Lastspitzen im Antriebsstrang zumindest reduziert werden.

Gemäß einer vorteilhaften Weiterbildung ist vorgesehen, dass der ersten Leistungsverzweigung und den zumindest zwei Schwungrädern jeweils genau eine schaltbare Kupplungsvorrichtung zwischengeschaltet ist, die voneinander unabhängig schaltbar sind.

Hierdurch lassen sich bei der Inbetriebnahme und/oder der Durchführung des Anlaufvorgangs verschiedene Betriebssituationen abbilden.

So können die Quaderballenpresse bzw. der Antriebsstrang zunächst ohne das Antreiben der zumindest zwei Schwungräder in Betrieb genommen werden. In Abhängigkeit von der Anordnung der zwischengeschalteten Kupplungsvorrichtungen lässt sich zumindest die erste Leistungsverzweigung des Antriebsstrangs antreiben. Zudem können zusätzlich zu der ersten Leistungsverzweigung eines oder beide Seitengetriebe angetrieben werden, ohne die zumindest zwei Schwungräder des jeweiligen Seitengetriebes anzutreiben. Mit einem zeitlichen Versatz hierzu lässt sich dann zunächst eines der Schwungräder und anschließend das zumindest eine weitere Schwungrad durch die Ansteuerung der jeweiligen Kupplungsvorrichtung zuschalten. Denkbar ist aber auch ein gleichzeitiges Zuschalten der zumindest zwei Schwungräder durch die entsprechende Ansteuerung der jeweiligen Kupplungsvorrichtung.

Alternativ können die Quaderballenpresse bzw. der Antriebsstrang zunächst nur mit einem der zumindest zwei Schwungräder in Betrieb genommen werden. Das zumindest eine weitere Schwungrad wird zeitlich versetzt zugeschaltet.

Insbesondere kann der Antriebsstrang einen Schneidrotor als weiteres Arbeitsaggregat der Quaderballenpresse antreiben, wobei eines der dem Presskolben zugeordneten Untersetzungsgetriebe und der Schneidrotor parallel zueinander an die erste Leistungsverzweigung angeschlossen sind.

Gemäß einer bevorzugten Weiterbildung kann dem Antriebsstrang eine Steuerungsvorrichtung zugeordnet sein, die zur, insbesondere automatischen, Ansteuerung der zumindest einen schaltbaren Kupplungsvorrichtung eingerichtet ist. Die dem Antriebsstrang zugeordnete Steuerungseinrichtung kann das Schalten der zumindest einen schaltbaren Kupplungsvorrichtung bevorzugt automatisch durchführen, so dass sichergestellt ist, dass eine Fehlbedienung oder ein zu frühes Zuschalten des oder der zumindest zwei Schwungräder eines jeweiligen Seitengetriebes nicht erfolgen kann.

Die vorliegende Erfindung wird nachstehend anhand eines in den Zeichnungen dargestellten Ausführungsbeispieles näher erläutert.
- Fig. 1: schematisch und exemplarisch eine Darstellung einer Quaderballenpresse in Seitenansicht;
- Fig. 2: schematisch und exemplarisch eine Darstellung einer Getriebeanordnung der Quaderballenpresse gemäß Fig. 1; und
- Fig. 3: schematisch und exemplarisch eine Darstellung einer weiteren Ausführungsform der Getriebeanordnung gemäß Fig. 2.

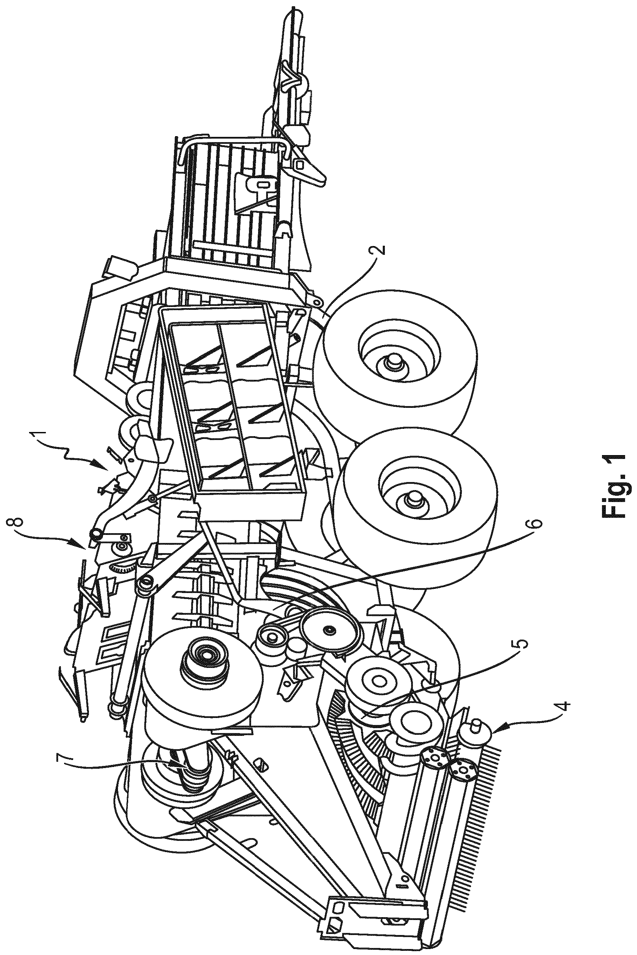

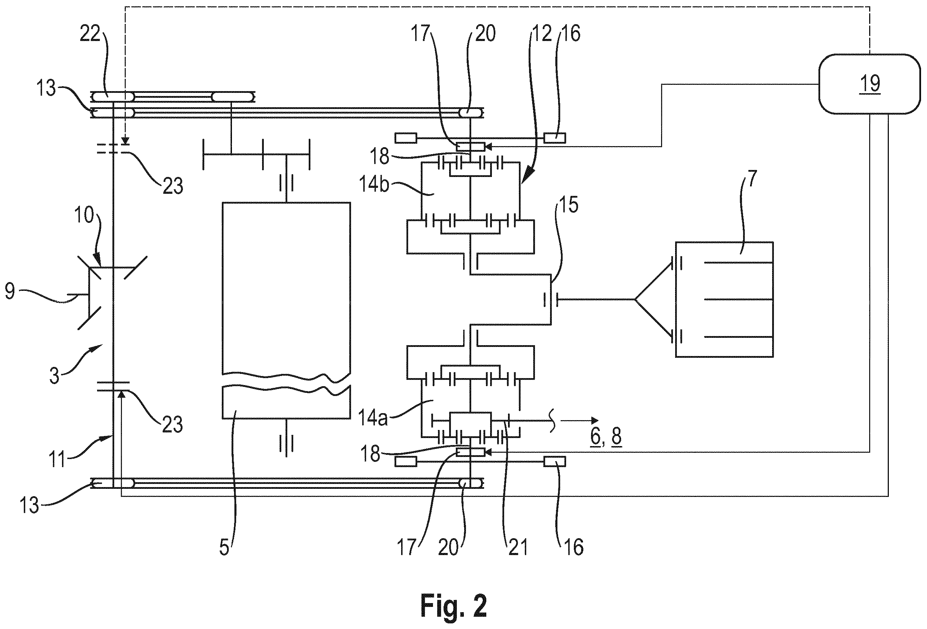

Fig. 1 zeigt schematisch und exemplarisch eine Darstellung einer Quaderballenpresse 1 in Seitenansicht. Die Quaderballenpresse 1 ist mit einer in den Figuren nicht dargestellten landwirtschaftlichen Arbeitsmaschine, insbesondere einem Traktor, koppelbar, so dass die Quaderballenpresse 1 und die landwirtschaftliche Arbeitsmaschine gemeinsam einen sogenannten landwirtschaftlichen Zug ausbilden. Die Quaderballenpresse 1 umfasst ein in Fig. 1 nicht dargestelltes Gehäuse, welches die an einem Fahrgestell 2 der Quaderballenpresse 1 befestigte Komponenten der Quaderballenpresse 1 umhüllend umgibt. Die Quaderballenpresse 1 umfasst ferner einen in Fig. 2 näher dargestellten Antriebsstrang 3, mittels dem diverse Arbeitsaggregate der Quaderballenpresse 1 angetrieben werden. Derartige Arbeitsaggregate sind beispielsweise eine als Pick-Up bekannte Aufnahmevorrichtung 4 zur Aufnahme von im Schwad auf einer landwirtschaftlichen Fläche abgelegten Ernteguts, ein Schneidrotor 5 zum Zerkleinern des aufgenommenen Ernteguts, ein Raffer 6 zum Vorverdichten des zerkleinerten Ernteguts und Zuführen desselben in einen Presskanal der Quaderballenpresse 1, ein in dem Presskanal der Quaderballenpresse 1 zwischen Endlagen beweglich angeordneten Presskolben 7 zum Pressen des vorverdichteten Ernteguts in einen Quaderballen, sowie ein Knoter 8 zum Binden des gepressten Quaderballens. Ein weiteres Arbeitsaggregat bilden eine Nadel und deren Nadelantrieb, die mit dem Knoter 8 zusammenwirken.

Der Antriebsstrang 3 der Quaderballenpresse 1 wird mittels der landwirtschaftlichen Arbeitsmaschine mit einer Antriebsleistung versorgt. Hierzu weist die landwirtschaftliche Arbeitsmaschine heckseitig einen an sich bekannten Zapfwellenabtrieb auf. Der Antriebsstrang 3 der Quaderballenpresse 1 umfasst eine Antriebswelle 9, die wiederum einen Drehmomenteneingangsanschluss des Antriebsstrangs 3 umfasst, mittels dem der Antriebsstrang 3 der Quaderballenpresse 1 mit dem Zapfwellenabtrieb der landwirtschaftlichen Arbeitsmaschine verbindbar ist.

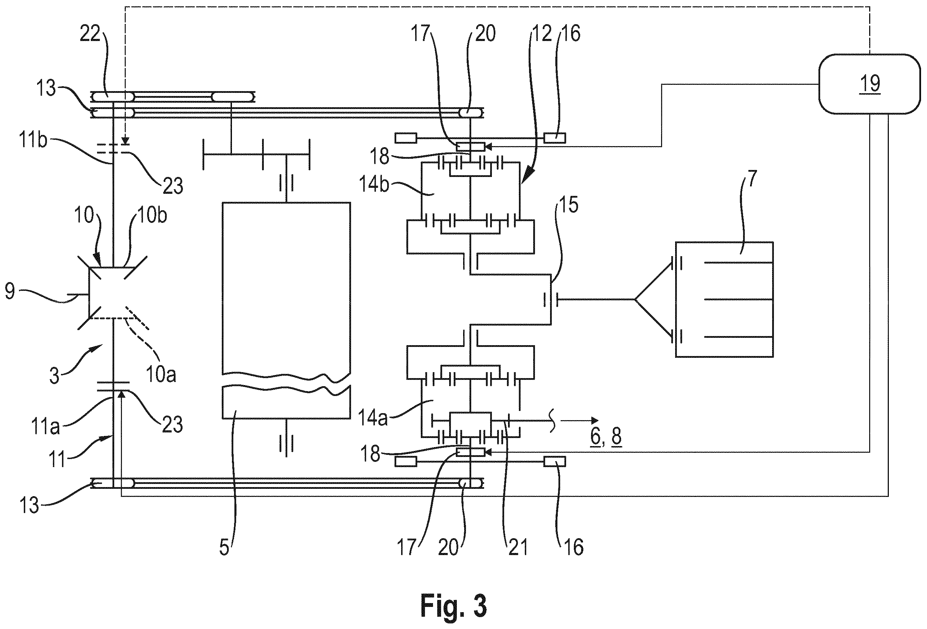

An die Antriebswelle 9 des Antriebsstrangs 3 schließt sich eine erste Leistungsverzweigung 10 an, die als Kegelradstufe ausgebildet ist. Ein Kegelrad der als Kegelradstufe ausgebildeten ersten Leistungsverzweigung 10 umfasst eine durchgehende Abtriebswelle 11, die sich quer zur Antriebswelle 9, d.h. quer zur Haupterstreckungsrichtung der Quaderballenpresse 1, erstreckt, an der das andere Kegelrad der Kegelradstufe angeschlossen ist. Denkbar ist auch, dass die Abtriebswelle 11 zweiteilig ausgeführt ist, wie in Fig. 3 dargestellt, sodass eine erste und eine zweite Abtriebswelle 11a, 11b von einem auf diesen angeordneten Kegelrad 10a, 10b an die als Kegelradstufe ausgebildete Leistungsverzweigung 10 angeschlossen sind. Zur Veranschaulichung ist das zusätzliche Kegelrad 10a strichliniert dargestellt.

Die Quaderballenpresse 1 bzw. der Antriebsstrang 3 der Quaderballenpresse 1 umfasst neben den zuvor genannten Antriebsstrangkomponenten eine als Getriebeanordnung ausgeführte Übertragungsvorrichtung 12. Wie in den Fig. 2 und 3 dargestellt, umfasst die Übertragungsvorrichtung 12 zwei Seitengetriebe 13, die mittelbar von einer Zapfwelle 5 der landwirtschaftlichen Arbeitsmaschine antreibbar sind. Mittelbar bedeutet in diesem Zusammenhang, dass die beiden Seitengetriebe 13 an die Leistungsverzweigung 10 angeschlossen sein können. Die zwei Seitengetriebe 13 sind einander gegenüberliegend angeordnet.

Wie insbesondere in Fig. 2 dargestellt, kann ein jeweiliger Antrieb der Seitengetriebe 13 auf der durchgehenden Abtriebswelle 11 respektive der ersten oder zweiten Abtriebswellen 11, 11a der Leistungsverzweigung 10, wie in Fig. 3 dargestellt, angeordnet sein. Eine mittels der Leistungsverzweigung 10 den beiden Seitengetriebe 13 bereitgestellte Antriebsleistung kann mittels der zwei Seitengetriebe 13 gewandelt werden; sie kann jedoch auch ohne Wandlung übertragen werden.

Die beiden Seitengetriebe 13 sind vorzugsweise als Zugmittelgetriebe, besonders bevorzugt als Keilriemengetriebe, ausgebildet, was vorteilhaft im Hinblick auf den Aufbau der als Getriebeanordnung ausgeführten Übertragungsvorrichtung 12 anzusehen ist. Die beiden Seitengetriebe 13 können jedoch ebenfalls als ein anderes Zugmittelgetriebe, beispielsweise als ein Kettengetriebe, oder als eine Kegelradstufe ausgebildet sein. Die Verwendung eines Zugmittelgetriebes als Seitengetriebe 13 erlaubt es besonders unkompliziert eine räumliche Distanz zwischen der Leistungsverzweigung 10 und dem Presskolben 7 zu überbrücken.

Den beiden Seitengetrieben 13 ist jeweils zumindest ein Untersetzungsgetriebe 14a, 14b nachgeschaltet, das dazu eingerichtet ist, die mittels des jeweiligen Seitengetriebes 13 bereitgestellte Antriebsleistung auf eine für den Betrieb des Presskolbens 7 erforderliche Antriebsleistung zu wandeln. Das dem jeweiligen Seitengetriebe 13 nachgeschaltete Untersetzungsgetriebe 14a, 14b ist abtriebsseitig mit einer Kurbelwelle 15 verbindbar bzw. verbunden, auf der der Presskolben 7 gelagert ist.

Dem zumindest einen Untersetzungsgetriebe 14a, 14b und dem jeweiligen Seitengetriebe 13 ist zumindest ein Schwungrad 16 zwischengeschaltet. Bevorzugt kann dem zumindest einen Schwungrad 16 und dem zumindest einen Untersetzungsgetriebe 14a, 14b wiederum zumindest eine schaltbare Kupplungseinrichtung 17 zwischengeschaltet sein. Vorzugsweise ist die zumindest eine schaltbare Kupplungseinrichtung 17 unmittelbar zwischen dem zumindest einen Schwungrad 16 und einem Getriebeeingang 18 des zumindest einen Untersetzungsgetriebes 14a, 14b angeordnet.

Die Betätigung der zumindest zwei schaltbaren Kupplungseinrichtungen 17 ist mittels einer der Übertragungsvorrichtung 12 zugeordneten Steuerungsvorrichtung 19 steuerbar. Die Steuerungsvorrichtung 19 kann der Quaderballenpresse 1 selbst oder aber der landwirtschaftlichen Arbeitsmaschine zugeordnet sein. Insbesondere kann die Steuerungsvorrichtung 19 die Betätigung der zumindest zwei schaltbaren Kupplungseinrichtungen 17 derart steuern, dass bei einer Inbetriebnahme der Quaderballenpresse 1 die beiden Kupplungseinrichtungen 17 in einem geöffneten Zustand vorliegen. Ein geöffneter Zustand der Kupplungseinrichtungen 17 ist ein Zustand, in dem das jeweilige Schwungrad 16 von dem diesem nachgeordneten Untersetzungsgetriebe 14a, 14b entkoppelt ist und somit keine Antriebsleistung von dem zumindest einen Schwungrad 16 bzw. dem das zumindest eine Schwungrad 16 tragenden Bauteil, vorzugsweise dem zumindest einen Seitengetriebe 13, an den Getriebeeingang 18 des jeweiligen Untersetzungsgetriebes 14a, 14b übertragen werden kann. In diesem Schaltzustand der zumindest zwei schaltbaren Kupplungseinrichtungen 17 werden die zumindest zwei Schwungräder 16 mittels der durch die beiden Seitengetriebe 13 bereitgestellten Antriebsleistung aus dem Stillstand beschleunigt. Sobald die Schwungräder 16 ihre Nenndrehzahl oder eine Drehzahl, die unterhalb der Nenndrehzahl liegt, vorzugsweise eine Drehzahl, die bis zu 70 % unterhalb der Nenndrehzahl liegt (der Wert 70 % unterhalb der Nenndrehzahl ist in diesem Bereich miteingeschlossen), erreicht haben, steuert die Steuerungsvorrichtung 19 die Betätigung der schaltbaren Kupplungseinrichtungen 17 derart, dass die schaltbaren Kupplungseinrichtungen 17 in einen geschlossenen Zustand überführt werden. Ein geschlossener Zustand ist ein Zustand, in dem das jeweilige Schwungrad 16 mit dem diesem nachgeordneten Untersetzungsgetriebe 14a, 14b gekoppelt ist und somit eine Antriebsleistung von dem Schwungrad 16 bzw. dem das Schwungrad 16 tragenden Bauteil, vorzugsweise dem jeweiligen Seitengetriebe 13, an den Getriebeeingang 18 des zumindest einen Untersetzungsgetriebes 14a, 14b übertragen werden kann.

Gemäß einer Ausführungsform der Übertragungsvorrichtung 12 ist die zumindest eine schaltbare Kupplungseinrichtung 17 als hydraulisch betätigbare bzw. schaltbare Kupplungseinrichtung 17 ausgebildet, insbesondere als hydraulisch betätigbare bzw. schaltbare Lamellenkupplung. In diesem Zusammenhang ist es vorstellbar, dass die Steuerungsvorrichtung 19 Schaltsignale für die Komponenten eines mit der zumindest einen hydraulisch betätigbaren bzw. schaltbaren Kupplungseinrichtung 17 verbundenen Hydraulikkreislaufs, beispielsweise einer Hydraulikpumpe, eines Schaltventils, etc., erzeugt, so dass ein Volumenstrom zum Betätigen der hydraulisch betätigbaren bzw. schaltbaren Kupplungseinrichtungen 17 mittels der Steuerungssignale an die Komponenten variabel einstellbar ist.

Grundsätzlich ist es auch vorstellbar, dass die Betätigung der zumindest zwei schaltbaren Kupplungseinrichtungen 17 auch manuell durch eine Bedienperson erfolgen kann, beispielsweise über die Betätigung eines Fußpedals in einer Fahrgastzelle der landwirtschaftlichen Arbeitsmaschine.

Gemäß einer Ausführungsform der als Getriebeanordnung ausgeführten Übertragungsvorrichtung 12 kann das zumindest eine Schwungrad 16 als Komponente eines Abtriebs 20 des zugehörigen Seitengetriebes 13 ausgebildet sein. Das zumindest eine Schwungrad 16 kann gemäß einer Ausführungsform integral mit dem Abtrieb 20 des zugehörigen Seitengetriebes 13 ausgebildet sein, so dass der Abtrieb 20 und das Schwungrad 16 ein kohärentes Bauteil ausbilden. Alternativ hierzu kann das zumindest eine Schwungrad 16 kraft-, form- und/oder stoffschlüssig mit dem Abtrieb 20 des zugehörigen Seitengetriebes 13 verbunden sein, dem das zumindest eine Schwungrad 16 nachgeordnet ist.

Die Übertragungsvorrichtung 12 kann ferner eine weitere Leistungsverzweigung 21 umfassen, die dem zumindest einen Untersetzungsgetriebe 14a, 14b zugeordnet ist. Die weitere Leistungsverzweigung 21 umfasst vorzugsweise ein mehrstufiges Stirnradgetriebe. Hierdurch ist es möglich parallel zum Presskolben 7 weitere Arbeitsaggregate, wie beispielsweise den Raffer 6 und/oder den Knoter 8, anzutreiben. Sofern das zumindest eine Untersetzungsgetriebe 14a, 14b als zweistufiges Planetengetriebe ausgebildet ist, ist die Leistungsverzweigung 21, insbesondere ein Zahnrad der als Stirnradgetriebe ausgeführten Leistungsverzweigung 21, mit einem ersten Steg einer ersten Getriebestufe des Untersetzungsgetriebes 14a wirkverbunden.

Der Antriebsstrang 3 der Quaderballenpresse 1 kann ferner ausgehend von der Leistungsverzweigung 10 bzw. der Abtriebswelle 11, 11a der Leistungsverzweigung 10 dazu eingerichtet sein, zumindest ein weiteres Arbeitsaggregat, beispielsweise eine Aufnahmevorrichtung 4 und/oder einen Schneidrotor 5, anzutreiben. Hierzu kann der Leistungsverzweigung 10 bzw. der Abtriebswelle 11, 11a der Leistungsverzweigung 10 zumindest ein weiteres Seitengetriebe 22 oder zumindest ein Winkelgetriebe nachgeschaltet sein, das die Antriebsleistung unmittelbar oder mittelbar, beispielsweise über ein oder mehrere Getriebe, an die weiteren Arbeitsaggregate 4, 5 der Quaderballenpresse 1 überträgt.

Um die an den Arbeitsaggregaten der Quaderballenpresse 1 erforderliche Antriebsleistung, insbesondere die Antriebsleistung des Presskolbens 7, zuverlässig bereitzustellen, ist vorgesehen, dass der ersten Leistungsverzweigung 10 und zumindest einem der Schwungräder 16 eine schaltbare Kupplungsvorrichtung 23 zwischengeschaltet ist. In den Fig. 2 und 3 ist eine weitere schaltbare Kupplungsvorrichtung 23 strichliniert dargestellt, welche eine optionale Ausführungsform der erfindungsgemäßen Quaderballenpresse 1 bildet.

In dem in den Fig. 2 und 3 dargestellten Ausführungsbeispielen kann die zumindest eine schaltbare Kupplungsvorrichtung 23 auf einem Abschnitt der der durchgehenden Abtriebswelle 11 zwischen der Leistungsverzweigung 10 und dem Seitengetriebe 13 bzw. der ersten Abtriebswelle 11a angeordnet sein. Die strichliniert dargestellte weitere schaltbare Kupplungsvorrichtung 23 kann auf einem gegenüberliegenden Abschnitt der durchgehenden Abtriebswelle 11 zwischen der Leistungsverzweigung 10 und dem Seitengetriebe 13 bzw. der zweiten Abtriebswelle 11b angeordnet sein.

Hierzu kann die zumindest eine schaltbare Kupplungsvorrichtung 23 als Trockenkupplung, nasslaufende Lamellenkupplung oder hydrodynamische Kupplung ausgeführt sein.

Eine alternative Ausführung sieht vor, dass die zumindest eine schaltbare Kupplungsvorrichtung 23 in zumindest eines der Seitengetriebe 13 integriert ist.

So kann die zumindest eine schaltbare Kupplungsvorrichtung 23 als ein verschiebbares Antriebsrad des als Zugmittelgetriebe ausgeführten Seitengetriebes 13 ausgeführt sein.

Eine weitere Alternative bildet die Ausführung der zumindest einen schaltbaren Kupplungsvorrichtung 23 als eine Riemenkupplung, welche in eines der als Zugmittelgetriebe ausgeführten Seitengetriebe 13 integriert ist.

Die zumindest eine schaltbare Kupplungsvorrichtung 23 ist dazu eingerichtet, bei einer Inbetriebnahme oder einem Anlaufvorgang der Quaderballenpresse 1 das zumindest eine Schwungrad 16 zumindest eines der Untersetzungsgetriebe 14a, 14b zuzuschalten. Bei der Inbetriebnahme oder der Durchführung eines Anlaufvorgangs der Quaderballenpresse 1 ist bei einer Ausführungsform mit genau einer schaltbaren Kupplungsvorrichtung 23 nur eines der Schwungräder 16 mit der Leistungsverzweigung 10 trieblich verbunden, indem sich die genau eine schaltbare Kupplungsvorrichtung 23 in geöffneter Schaltstellung befindet. Das Zuschalten des weiteren Schwungrades 16 mittels der schaltbaren Kupplungsvorrichtung 23 erfolgt zeitlich versetzt durch das Schließen der schaltbaren Kupplungsvorrichtung 23.

Das Vorsehen zumindest einer schaltbaren Kupplung 23 in dem den Schwungrändern 16 vorgeschalteten Teil des Antriebsstrangs 3 ermöglicht es, die Schwungräder 16 nacheinander bei einer Inbetriebnahme der Quaderballenpresse 1 zuzuschalten, wodurch die mittels des Zapfwellenabtriebs der Arbeitsmaschine anzutreibende Masse bei einer Inbetriebnahme der Quaderballenpresse 1 graduell erhöht werden kann. Die erfindungsgemäß Quaderballenpresse 1 zeichnet sich somit durch einen geringeren Bedarf der von der Arbeitsmaschine bereitzustellenden Antriebsleistung aus. Somit kann die Quaderballenpresse 1 auch von nicht so leistungsstarken Arbeitsmaschinen respektive Traktoren in Betrieb genommen werden.

Dem Antriebsstrang 3 ist die Steuerungsvorrichtung 19 zugeordnet, die zur, insbesondere automatischen, Ansteuerung der zumindest einen schaltbaren Kupplungsvorrichtung 23 eingerichtet ist.

Gemäß der vorteilhaften Weiterbildung, dass der ersten Leistungsverzweigung 10 und den zumindest zwei Schwungrädern 16 jeweils genau eine schaltbare Kupplungsvorrichtung 23 zwischengeschaltet ist, die voneinander unabhängig schaltbar sind, lassen sich bei der Inbetriebnahme und/oder der Durchführung des Anlaufvorgangs der Quaderballenpresse 1 verschiedene Betriebssituationen abbilden.

So können die Quaderballenpresse 1 bzw. der Antriebsstrang 3 zunächst ohne das Antreiben der zumindest zwei Schwungräder 16 in Betrieb genommen werden, indem sich beide Kupplungsvorrichtungen 23 in geöffneter Schaltstellung befinden. In Abhängigkeit von der Anordnung der zwischengeschalteten Kupplungsvorrichtungen 23 im Antriebsstrang 3 lässt sich zumindest die erste Leistungsverzweigung 10 antreiben. Zudem können die Seitengetriebe 13 angetrieben werden, ohne dabei die zumindest zwei Schwungräder 16 anzutreiben. Mit einem zeitlichen Versatz zum Antreiben zumindest der ersten Leistungsverzweigung 10 lässt sich dann zunächst eines der Schwungräder 16 eines der beiden Seitengetriebe 13 und anschließend das zumindest eine weitere Schwungrad 16 des anderen Seitengetriebes 13 zuschalten. Denkbar ist aber auch ein gleichzeitiges Zuschalten der zumindest zwei Schwungräder 16 der genau zwei Seitengetriebe 13.

Alternativ können die Quaderballenpresse 1 bzw. der Antriebsstrang 3 zunächst nur mit einem der zumindest zwei Schwungräder 16 in Betrieb genommen werden. Das zumindest eine weitere Schwungrad 16 wird zeitlich versetzt zugeschaltet.

Insbesondere kann der Antriebsstrang 3 den Schneidrotor 5 als weiteres Arbeitsaggregat der Quaderballenpresse 1 antreiben, wobei eines der dem Presskolben 7 zugeordneten Untersetzungsgetriebe 14a, 14b und der Schneidrotor 5 parallel zueinander an die erste Leistungsverzweigung 10 angeschlossen sind.

### Bezugszeichenliste

- 1: Quaderballenpresse
- 2: Fahrgestell
- 3: Antriebsstrang
- 4: Aufnahmevorrichtung
- 5: Schneidrotor
- 6: Raffer
- 7: Presskolben
- 8: Knoter
- 9: Antriebswelle
- 10: Leistungsverzweigung
- 10a: Kegelrad
- 10b: Kegelrad
- 11: Abtriebswelle
- 11a: Abtriebswelle
- 11b: Abtriebswelle
- 12: Übertragungsvorrichtung
- 13: Seitengetriebe
- 14a: Untersetzungsgetriebe
- 14b: Untersetzungsgetriebe
- 15: Kurbelwelle
- 16: Schwungrad
- 17: Schaltbare Kupplungseinrichtung
- 18: Getriebeeingang
- 19: Steuerungsvorrichtung
- 20: Abtrieb
- 21: Leistungsverzweigung
- 22: Seitengetriebe
- 23: Schaltbare Kupplungsvorrichtung

## Patentansprüche

1. Quaderballenpresse (1), die zumindest einen in einem Presskanal zwischen Endlagen beweglich angeordneten Presskolben (7) sowie einen Antriebsstrang (3) umfasst, der dazu ausgebildet ist, zumindest den Presskolben (7) anzutreiben, wobei der Antriebsstrang (3) einen Drehmomenteneingangsanschluss aufweist, mittels dem ein Drehmoment dem Antriebsstrang (3) zuführbar ist, wobei der Antriebsstrang (3) eine dem Drehmomenteneingangsanschluss nachgeordnete Übertragungsvorrichtung (12) mit zumindest einem Schwungrad (16) umfasst, **dadurch gekennzeichnet, dass** die Übertragungsvorrichtung (12) eine erste Leistungsverzweigung (10), die mit dem Drehmomenteneingangsanschluss verbunden ist, und zwei dem Presskolben (7) zugeordnete Untersetzungsgetriebe (14a, 14b) umfasst, die parallel zueinander an die erste Leistungsverzweigung (10) angeschlossen sind, wobei jedem Untersetzungsgetriebe (14a, 14b) zumindest ein Schwungrad (16) vorgeschaltet ist, wobei der ersten Leistungsverzweigung (10) und zumindest einem der Schwungräder (16) eine schaltbare Kupplungsvorrichtung (23) zwischengeschaltet ist, welche dazu eingerichtet ist, bei einer Inbetriebnahme oder einem Anlaufvorgang der Quaderballenpresse (1) das zumindest eine Schwungrad (16) zuzuschalten.

2. Quaderballenpresse (1) nach Anspruch 1, **dadurch gekennzeichnet, dass** der ersten Leistungsverzweigung (10) und den dem Presskolben (7) zugeordneten Untersetzungsgetrieben (14a, 14b) jeweils zumindest ein Seitengetriebe (13) zwischengeschaltet ist.

3. Quaderballenpresse (1) nach Anspruch 2, **dadurch gekennzeichnet, dass** den dem Presskolben (7) zugeordneten Untersetzungsgetrieben (14a, 14b) und dem zugehörigen Seitengetriebe (13) jeweils eines der Schwungräder (16) zwischengeschaltet ist.

4. Quaderballenpresse (1) nach einem der Ansprüche 2 oder 3, **dadurch gekennzeichnet, dass** die zumindest eine schaltbare Kupplungsvorrichtung (23) in zumindest eines der Seitengetriebe (13) integriert.

5. Quaderballenpresse (1) nach einem der Ansprüche 2 bis 4, **dadurch gekennzeichnet, dass** die Seitengetriebe (13) als Zugmittelgetriebe, vorzugsweise Keilriemengetriebe oder Kettengetriebe, ausgeführt sind.

6. Quaderballenpresse (1) nach Anspruch 5, **dadurch gekennzeichnet, dass** die zumindest eine schaltbare Kupplungsvorrichtung (23) als ein verschiebbares Antriebsrad des als Zugmittelgetriebe ausgeführten Seitengetriebes (13) ausgeführt ist.

7. Quaderballenpresse (1) nach Anspruch 5, **dadurch gekennzeichnet, dass** die zumindest eine schaltbare Kupplungsvorrichtung (23) als eine Riemenkupplung ausgebildet ist, welche in eines der als Zugmittelgetriebe ausgeführten Seitengetriebe (13) integriert ist

8. Quaderballenpresse (1) nach einem der Ansprüche 2 oder 3, **dadurch gekennzeichnet, dass** die zumindest eine schaltbare Kupplungsvorrichtung (23) auf einer die erste Leistungsverzweigung (10) und eines der Seitengetriebe (13) verbindenden Abtriebswelle (11, 11a, 11b) angeordnet ist.

9. Quaderballenpresse (1) nach Anspruch 8, **dadurch gekennzeichnet, dass** die Abtriebswelle (11, 11a, 11b) als eine durchgehende Welle oder als eine zweiteilige Welle ausgeführt ist.

10. Quaderballenpresse (1) nach einem der vorangehenden Ansprüche, **dadurch gekennzeichnet, dass** die zumindest eine schaltbare Kupplungsvorrichtung (23) als Trockenkupplung, nasslaufende Lamellenkupplung oder hydrodynamische Kupplung ausgeführt ist.

11. Quaderballenpresse (1) nach einem der vorangehenden Ansprüche, **dadurch gekennzeichnet, dass** der ersten Leistungsverzweigung (10) und den zumindest zwei Schwungrädern (16) jeweils genau eine schaltbare Kupplungsvorrichtung (23) zwischengeschaltet ist, die voneinander unabhängig schaltbar sind.

12. Quaderballenpresse (1) nach einem der vorangehenden Ansprüche, **dadurch gekennzeichnet, dass** der Antriebsstrang (3) einen Schneidrotor (5) als weiteres Arbeitsaggregat der Quaderballenpresse (1) antreibt, wobei eines der dem Presskolben (7) zugeordneten Untersetzungsgetriebe (14a, 14b) und der Schneidrotor (5) parallel zueinander an die erste Leistungsverzweigung (10) angeschlossen sind.

13. Quaderballenpresse (1) nach einem der vorangehenden Ansprüche, **dadurch gekennzeichnet, dass** dem Antriebsstrang (3) eine Steuerungsvorrichtung (19) zugeordnet ist, die zur, insbesondere automatischen, Ansteuerung der zumindest einen schaltbaren Kupplungsvorrichtung (23) eingerichtet ist.

## Claims

1. A square baler (1), which comprises at least one baler piston (7) movably disposed between end positions in a baling channel, as well as a drive train (3) which is constructed to drive at least the baler piston (7), wherein the drive train (3) has a torque input connection, by means of which a torque can be supplied to the drive train (3), wherein the drive train (3) comprises a transmission device (12) with at least one flywheel (16) positioned downstream of the torque input connection, **characterized in that** the transmission device (12) comprises a first power split (10), which is connected to the torque input connection, and two reduction gears (14a, 14b) associated with the baler piston (7), which are connected to the first power split (10) in parallel to one another, wherein at least one flywheel (16) is connected upstream of each reduction gear (14a, 14b), wherein a shiftable clutch device (23) is interposed between the first power split (10) and at least one of the flywheels (16), the clutch device being configured to engage the at least one flywheel (16) during an initial operation or a startup procedure of the square baler (1).

2. The square baler (1) according to claim 1, **characterized in that** a respective at least one side gear (13) is interposed between the first power split (10) and the reduction gears (14a, 14b) associated with the baler piston (7).

3. The square baler (1) according to claim 2, **characterized in that** a respective one of the flywheels (16) is interposed between the reduction gears (14a, 14b) associated with the baler piston (7) and the associated side gear (13).

4. The square baler (1) according to one of claims 2 or 3, **characterized in that** the at least one shiftable clutch device (23) is integrated into at least one of the side gears (13).

5. The square baler (1) according to one of claims 2 to 4, **characterized in that** the side gears (13) are configured as traction gears, preferably V-belt gears or chain gears.

6. The square baler (1) according to claim 5, **characterized in that** the at least one shiftable clutch device (23) is constructed as a displaceable drive wheel of the side gear (13) constructed as a traction gear.

7. The square baler (1) according to claim 5, **characterized in that** the at least one shiftable clutch device (23) is constructed as a belt clutch which is integrated into one of the side gears (13) constructed as a traction gear.

8. The square baler (1) according to one of claims 2 or 3, **characterized in that** the at least one shiftable clutch device (23) is disposed on an output shaft (11, 11a, 11b) connecting the first power split (10) and one of the side gears (13).

9. The square baler (1) according to claim 8, **characterized in that** the output shaft (11, 11a, 11b) is constructed as a continuous shaft or as a two-part shaft.

10. The square baler (1) according to one of the preceding claims, **characterized in that** the at least one shiftable clutch device (23) is constructed as a dry clutch, a wet multi-plate clutch or a hydrodynamic clutch.

11. The square baler (1) according to one of the preceding claims, **characterized in that** respectively, exactly one shiftable clutch device (23) is interposed between the first power split (10) and the at least two flywheels (16), the clutch devices being shiftable independently of one another.

12. The square baler (1) according to one of the preceding claims, **characterized in that** the drive train (3) drives a cutting rotor (5) as a further working assembly of the square baler (1), wherein one of the reduction gears (14a, 14b) associated with the baler piston (7) and the cutting rotor (5) are connected to the first power split (10) in parallel to one another.

13. The square baler (1) according to one of the preceding claims, **characterized in that** a control device (19) is associated with the drive train (3) which is configured to control the at least one shiftable clutch device (23), in particular automatically.

## Revendications

1. Presse à balles carrées (1) qui comprend au moins un piston de pressage (7), disposé dans un canal de pressage avec possibilité de déplacement entre des positions extrêmes, ainsi qu'une chaîne cinématique (3) qui est réalisée pour entraîner au moins le piston de pressage (7), la chaîne cinématique (3) présentant un raccord d'entrée de couple qui permet d'amener un couple à la chaîne cinématique (3), la chaîne cinématique (3) comprenant un dispositif de transmission (12) placé à la suite du raccord d'entrée de couple et doté d'au moins un volant d'inertie (16), **caractérisée en ce que** le dispositif de transmission (12) comprend un premier répartiteur de puissance (10), relié au raccord d'entrée de couple, et deux mécanismes réducteurs (14a, 14b) associés au piston de pressage (7), qui sont raccordés au premier répartiteur de puissance (10), parallèlement l'un à l'autre, au moins un volant d'inertie (16) étant placé en amont de chaque mécanisme réducteur (14a, 14b), un dispositif d'accouplement (23) embrayable étant intercalé entre le premier répartiteur de puissance (10) et au moins un des volants d'inertie (16), lequel dispositif est agencé pour accoupler le volant d'inertie (16), au nombre d'au moins un, lors d'une mise en service ou d'une opération de démarrage de la presse à balles carrées (1).

2. Presse à balles carrées (1) selon la revendication 1, **caractérisée en ce qu'**au moins une transmission latérale (13) est intercalée respectivement entre le premier répartiteur de puissance (10) et les mécanismes réducteurs (14a, 14b) associés au piston de pressage (7).

3. Presse à balles carrées (1) selon la revendication 2, **caractérisée en ce que** l'un des volants d'inertie (16) est intercalé respectivement entre les mécanismes réducteurs (14a, 14b), associés au piston de pressage (7), et la transmission latérale (13) associée.

4. Presse à balles carrées (1) selon une des revendications 2 ou 3, **caractérisée en ce que** le dispositif d'accouplement (23) embrayable, au nombre d'au moins un, est intégré dans au moins une des transmissions latérales (13).

5. Presse à balles carrées (1) selon une des revendications 2 à 4, **caractérisée en ce que** les transmissions latérales (13) sont réalisées sous forme de mécanismes à élément de traction, de préférence de mécanismes à courroie trapézoïdale ou de mécanismes à chaîne.

6. Presse à balles carrées (1) selon la revendication 5, **caractérisée en ce que** le dispositif d'accouplement (23) embrayable, au nombre d'au moins un, est réalisé sous la forme d'une roue d'entraînement déplaçable de la transmission latérale (13) réalisée comme transmission à élément de traction.

7. Presse à balles carrées (1) selon la revendication 5, **caractérisée en ce que** le dispositif d'accouplement (23) embrayable, au nombre d'au moins un, est réalisé sous la forme d'un accouplement à courroie qui est intégré dans une des transmissions latérales (13) réalisées comme transmissions à élément de traction.

8. Presse à balles carrées (1) selon une des revendications 2 ou 3, **caractérisée en ce que** le dispositif d'accouplement (23) embrayable, au nombre d'au moins un, est disposé sur un arbre de sortie (11, 11a, 11b) reliant le premier répartiteur de puissance (10) et l'une des transmissions latérales (13).

9. Presse à balles carrées (1) selon la revendication 8, **caractérisée en ce que** l'arbre de sortie (11, 11a, 11b) est réalisé comme arbre continu ou comme arbre en deux parties.

10. Presse à balles carrées (1) selon une des revendications précédentes, **caractérisée en ce que** le dispositif d'accouplement (23) embrayable, au nombre d'au moins un, est réalisé sous forme d'accouplement à sec, d'accouplement à disques multiples de type humide ou d'accouplement hydrodynamique.

11. Presse à balles carrées (1) selon une des revendications précédentes, **caractérisée en ce qu'**est intercalé entre le premier répartiteur de puissance (10) et les volants d'inertie (16), au nombre d'au moins deux, chaque fois exactement un dispositif d'accouplement (23) embrayable, qui peuvent être embrayés indépendamment l'un de l'autre.

12. Presse à balles carrées (1) selon une des revendications précédentes, **caractérisée en ce que** la chaîne cinématique (3) entraîne un rotor de coupe (5) en tant qu'organe de travail supplémentaire de la presse à balles carrées (1), où l'un des mécanismes réducteurs (14a, 14b), associés au piston de pressage (7), et le rotor de coupe (5) sont raccordés au premier répartiteur de puissance (10), parallèlement l'un à l'autre.

13. Presse à balles carrées (1) selon une des revendications précédentes, **caractérisée en ce qu'**est associé à la chaîne cinématique (3), un dispositif de commande (19) qui est conçu pour l'activation, notamment automatique, du dispositif d'accouplement (23) embrayable, au nombre d'au moins un.
